# EUROPÄISCHE PATENTANMELDUNG

(11) **EP 2 039 412 A2**
(43) Veröffentlichungstag der Anmeldung: **25.03.2009**
(21) Anmeldenummer: 08405199.4
(22) Anmeldetag: 22.08.2008
(51) Int. Cl.: B01D 39/20

(54) **Abgaspartikelfilter, sowie ein Verfahren zur Herstellung eines Abgaspartikelfilters**

(30) Priorität: 21.09.2007 EP 07405285
(71) Anmelder: Wärtsilä Schweiz AG, 8401 Winterthur (CH)
(72) Erfinder: Schlager, Dietmar, 8408 Winterthur (CH)
(74) Vertreter: Sulzer Management AG

(57) **Zusammenfassung**

Die Erfindung betrifft einen Abgaspartikelfilter für einen Gas, im Speziellen Ergas und / oder Flüssignaturgas und / oder Schweröl und / oder Marine Dieselöl verbrennenden Dieselmotor, insbesondere Zweitakt-Grossdieselmotor. Erfindungsgemäss umfasst dabei der Abgaspartikelfilter ein Filterelement mit einem metallischen Schaumkörper, wobei der metallische Schaumkörper eine Metalllegierung umfasst, die widerstandsfähig gegen Hochtemperaturkorrosion durch eine Verbrennungsasche ist.

## Beschreibung

Die Erfindung betrifft einen Abgaspartikelfilter für einen Gas, im Speziellen einen Erdgas und / oder Flüssignaturgas und / oder Schweröl und / oder Marine Dieselöl verbrennenden Dieselmotor, insbesondere Zweitakt-Grossdieselmotor, sowie ein Verfahren zum Herstellen einen Abgaspartikelfilters gemäss dem Oberbegriff des unabhängigen Anspruchs der jeweiligen Kategorie.

Abgaspartikelfilter für Verbrennungsmotoren, zum Beispiel für Ottomotoren und Dieselmotoren von Personenkraftwagen und Lastkraftwagen, aber auch für sonstige Verbrennungsmotoren, wie zum Beispiel für kleinere Schiffsmotoren, die mit Benzin oder Dieselkraftstoff als Zweitakt- oder Viertakt-Motoren betrieben werden, sind zur Reduktion der schädlichen Abgas- und Russpartikel aus Stand der Technik seit einigen Jahren wohlbekannt.

Die Zusammensetzung der Abgase solcher Verbrennungsmotoren ist abhängig von der Motorenbauart, dem Betriebszyklus und der Kraftstoffqualität. Die Abgase enthalten dabei im wesentlichen Wasserdampf (H₂O), Kohlendioxid (CO₂), Kohlenmonoxid (CO), Stickoxide (NOₓ), Sauerstoff (O₂), Russpartikel (C), Kohlenwasserstoffe (HC), Schwefeldioxid (SO₂), Motorabrieb und Asche.

Eine Minderung der Umwelt belastenden Schadstoffe und des Russes sind gesetzlich vorgegeben. Ein wirkungsvolles Hilfsmittel zur Senkung der Partikelemissionen stellen entsprechende Partikelfiltersysteme dar.

Ein solcher Abgaspartikelfilter für PKW Dieselmotoren wird zum Beispiel in der DE 102 45 510 A1 vorgeschlagen.

Die Wirksamkeit eines solchen Partikelfilters ist dabei definiert durch seinen Abscheidungsgrad, seine Speicherfähigkeit, seine Durchströmbarkeit und seine Standzeit.

Von der Arbeitsweise unterscheidet man unter anderem zwischen Oberflächen- und Tiefenfilter.

Beim Oberflächenfilter bleiben die abzuscheidenden Stoffe an der Oberfläche des porösen Filtermaterials haften, wobei die abgeschiedenen Stoffe eine zusätzliche Abscheidewirkung haben und die Druckdifferenz im Filtersystem sich vergrössert.

Beim Tiefenfilter tritt neben der mechanischen Durchgangssperre, also einem Siebeffekt für die abzuscheidenden Produkte noch die Absorptionseigenschaft des tief gestaffelten Filtermediums hinzu. Wirksame Tiefenfilter erfordern deshalb sehr grosse Oberflächen, wie sie zum Beispiel Wirrfasergelege, beispielsweise aus Stahlwolle, und offenporige Keramikschäume aufweisen.

Bekannte Abgasfilter für Pkw-Dieselmotoren bestehen dabei meistens aus porösen keramischen Grundkörpern, die von parallelen, wabenförmigen Kanälen durchzogen sind. Die Wandstärken der keramischen Monolithe liegen bei 0.3 bis 0.15 mm. Als Material wird zum Beispiel Cordierit, ein Magnesium-Aluminium-Silikat (2MgO 2Al₂O₃ 5SiO₂), oder auch extrudiertes Siliciumcarbid verwendet.

Daneben sind Filter aus keramischem Schaum, wabenförmig gefalzten Edelstahlblechen oder Stahlwolle bekannt, die teilweise mit katalytischen Beschichtungen versehen sein können.

Die Nachteile bei den Keramikfiltern sind die schlechte Wärmeleitfähigkeit, bei keramischen Schäumen zusätzlich die geringe Standfestigkeit, beim Siliciumkarbid der hohe Preis und beim Stahlwollefilter die kurze Standzeit, da die Stahlwolle bei den auftretenden hohen Temperaturen korrodiert und oxidiert, d.h. verbrennt.

Die Autoren der DE 102 45 510 A1 schlagen zur Lösung dieser Probleme einen Abgasfilter für PKW-Dieselmotoren vor, der einen metallischen Schaumkörper aus Stahl umfasst, der einen Gehalt von 3% bis 6% Si und / oder 1% bis 4% Cr umfasst.

Was dabei allen bekannten Partikelfiltern gemein ist, ist dass sie durchweg für Motoren konzipiert sind, die hochreine Brennstoffe wie Benzin, oder Dieselkraftstoffe oder z.B. Autogas verbrennen. Diese modernen Kraftstoffe sind hoch destilliert und werden in aufwendigen Verfahren gereinigt. So werden zum Beispiel heute durchweg schwefelfreie oder zumindest schwefelarme Kraftstoffe angeboten, die zusätzlich von weiteren schädlichen chemischen Bestandteilen wie Vanadium, Blei, Chlor und vielem anderen mehr gereinigt sind, so dass die entsprechenden schädlichen Verbrennungsprodukte erst gar nicht entstehen können. Das hat nicht nur zur Folge, dass die Verbrennungsprodukte von modernen Kraftstoffen gegenüber früheren Zeiten von vielen schädlichen gasförmigen Verbrennungsprodukten befreit sind. Auch die festen Verbrennungsprodukte wie Russ oder Verbrennungsaschen sind chemisch vergleichsweise wenig aggressiv, so dass die Materialauswahl für die Herstellung der Partikelfilter wenig kritisch ist, da diese durch die Russpartikel und Verbrennungsaschen im Betriebszustand, auch bei höheren Temperaturen keinen übermässig starken chemischen Angriffen ausgesetzt sind.

Aufgrund immer höherer gesetzlicher Umweltstandards wird jedoch auch für Motoren, die mit Treibstoffen minderer Qualität betrieben werden, die Notwendigkeit von Partikelfiltern zur Reinigung der Verbrennungsabgase immer dringlicher.

Für Motoren, die mit solchen Treibstoffen minderer Qualität, wie zum Beispiel mit Schweröl oder Flüssignaturgas betrieben werden, sind die weiter oben erwähnten keramischen Partikelfilter oder der Partikelfilter gemäss DE 102 45 510 A1 nicht verwendbar.

Auch wenn die keramischen Partikelfilter eine relativ hohe Resistenz gegen chemische Angriffe durch die Verunreinigungen in den minderwertigen Kraftstoffen aufweisen, haben die keramischen Partikelfilter allerdings eine viel zu niedrige Wärmeleitfähigkeit. Das hat zur Folge, dass insbesondere dann, wenn der Partikeifilter von Zeit zu Zeit mit einer Freibrenneinrichtung in an sich bekannter Weise von den herausgefilterten Partikeln frei gebrannt werden muss, die dabei entstehende erhebliche Menge an Wärme nicht genügend abgeführt werden kann, was letztlich zur Beschädigung oder Zerstörung des Partikelfilters bzw. zu einem sehr vorzeitigen Ausfall des Partikelfilters führt.

Somit kommt diese Art von Partikelfilter für solche Anwendungen nicht in Frage. Vor allem nicht in sehr grossen Motoren, wie zum Beispiel Zweitakt-Grossdieselmotoren für Schiffe oder stationäre Anlagen, die bauartbedingt über relativ grosse Partikelfilter verfügen müssten, wodurch das Problem der Wärmeabführung nochmals massiv verschärft wird.

Die bisher bekannten Partikelfilter, die aus Stahlschäumen aufgebaut sind, wie zum Beispiel der Partikelfilter gemäss DE 102 45 510 A1, können jedoch bei Verwendung von Treibstoffen minderer Qualität, wie zum Beispiel bei Verwendung von Schweröl in Zweitakt-Grossdieselmotoren, ebenfalls nicht verwendet werden. Die bekannten Stahlschäume halten nämlich den chemisch extrem aggressiven Angriffen der Verbrennungsprodukte der Treibstoffe minderer Qualität nicht Stand.

Diese Treibstoffe können dabei alle möglichen Verunreinigungen enthalten, insbesondere Schwefel, Blei, Natrium oder Vanadium, wobei vor allem Vanadium und Natrium, auch zusammen mit Schwefel, bereits vor einiger Zeit als wesentliche Ursache für Hochtemperaturkorrosion identifiziert wurde, und insbesondere im Verbrennungsraum der zum Beispiel mit Schweröl oder Flüssignaturgas betriebenen Motoren zu erheblichen Problemen führt.

Daher ist es zum Beispiel bekannt, die entsprechenden Motorkomponenten mit Schutzschichten gegen Hochtemperaturkorrosion, häufig auch einfach als Heisskorrosion oder Heissgaskorrosion bezeichnet, zu versehen.

Man versteht darunter zum Beispiel Oberflächenschutzschichten, die einen hohen Widerstand gegen Korrosion, insbesondere gegen Oxidation oder Sulfidation bei hohen Temperaturen und in chemisch aggressiven Umgebungen bieten. Sie werden beispielsweise durch thermisches Spritzen hergestellt, wobei MCrAIY-Schichten als Hochtemperaturkorrosionsschutz weit verbreitet sind. Das Metall M kann dabei z.B. Eisen, Kobalt oder Nickel oder eine Legierung dieser oder anderer Metalle sein. Auch Aluminium-Chrom-Schichten, die zum Beispiel durch Chromalitieren gebildet werden, zeigen in vielen Anwendungen eine mehr oder weniger gute Beständigkeit gegen Hochtemperaturkorrosion, insbesondere in sulfathaltigen Medien.

Das Phänomen der Hochtemperaturkorrosion kann dabei überall dort auftreten, wo relativ hohe Prozesstemperaturen von einigen 100°C bis weit über 1000°C herrschen, wobei häufig nicht nur die hohen Temperaturen als solches für das Auftreten korrosiver Effekte verantwortlich sind, sondern auch chemisch aggressive Umgebungsbedingungen anzutreffen sind, die zum Beispiel auf Verbrennungsprodukte oder andere chemische Reaktionsprodukte zurückzuführen sind oder auch von Beimischungen in Brennstoffen, Schmiermitteln usw. hervorgerufen werden können.

Somit sind besonders Werkstücke, Bauteile und Maschinenkomponenten, die in mehr oder weniger direktem Kontakt mit Verbrennungsvorgängen und den entsprechenden Verbrennungsprodukten stehen, von Hochtemperaturkorrosion bedroht. Beispiele hierfür sind Kolbenoberflächen von Kolben in Brennkraftmaschinen, Zylinderwände, Zylinderdeckel, Einspritzdüsen, Gaswechselventile, aber auch die Komponenten der Abgassysteme von Brennkraftmaschinen, wie zum Beispiel Turbolader, insbesondere auch Turbinenteile und / oder die Abgas Zu- oder Abführung von Abgas- und Turbolader-Systemen.

In der DE 102 04 812 werden dazu als Korrosionsschutz Schichten aus Bornitrid und / oder Zikoniumoxid als Grundmaterial vorgeschlagen, die allerdings aufgrund der sie bildenden Materialien teuer sind und die Schichten zudem aufwendig herzustellen sind.

Ein wesentlicher Einfluss der in einer Verbrennungsmaschine, insbesondere in einem Grossdieselmotor zu beobachtenden Hochtemperaturkorrosion geht dabei von schmelzflüssigen Phasen aus. Solche schmelzflüssigen Phasen können vor allem bei Verbrennung von Schweröl Vanadate enthalten, wie zum Beispiel Natriumvanadylvanadate, die unter anderem röntgenographisch nachweisbar sind.

Technische Hintergrundinformationen zu Vanadat induzierten Korrosionsprozessen findet man zum Beispiel in dem Artikel von M. Seierstein et al., "Sodium vanadate-induced corrosion of nickel and MCrAlY coatings on Inconel 600", in Material Science and Technology, July 1987, Vol. 3, S. 576.

Beim Betrieb eines Dieselmotors mit Schweröl oder Flüssignaturgas kann die Aufschmelzung, das heisst das Auftreten der schmelzflüssigen, z.B. Vanadium enthaltenen Phasen ab ca. 400°C, bei entsprechenden Verunreinigungen mit anderen chemischen Elementen sogar bereits unterhalb von 400°C beobachtet werden. Solche schmelzflüssigen Phasen sind unter anderem in der Lage, quasi natürlich auf einem Metall aufgewachsene schützende Oxidschichten chemisch aufzuschliessen, so dass das darunter liegende Metall schutzlos einem Angriff durch Hochtemperaturkorrosion ausgeliefert ist. In der Veröffentlichung "Protection Against High Temperature Corrosion with Laser Welded Claddings - Applied And Tested On Exhaust Valve Discs Of Large Diesel Engines Burning Heavy Fuel Oil" von Schlager et al. in Materials and Corrosion 53, 103 - 110 (2002) wird diese Problematik insbesondere mit Blick auf die korrodierende Wirkung auf Ventiltellern von Grossdieselmotoren eingehend untersucht.

Dabei ist es bekannt, dass die Bildung tief schmelzender Vanadatphasen durch Zugabe von bestimmten Legierungselementen verhinderbar ist, da die zuvor genannten Legierungselemente die Ausbildung hochschmelzender Vanadiumphasen ausbilden, die dann bei den im Verbrennungsraum im Betriebszustand herrschenden Temperaturen nicht aufschmelzen, also im wesentlichen nicht aufgeschmolzene Aschen bilden, wodurch der Schutz gegen Hochtemperaturkorrosion entschieden verbessert ist.

Zur Zuführung der zuvor genannten bestimmten Legierungselemente zur Bildung der hoch schmelzenden Phasen, z.B. in den Brennraum einer Brennkraftmaschine, wird bei den aus dem Stand der Technik bekannten Lösungen vorgeschlagen, die notwendigen Legierungselemente zur Bildung der hoch schmelzenden Phasen entweder über das Schmierölsystem oder direkt über das Kraftstoffsystem der Verbrennung im Verbrennungsraum zuzuführen, um die Bildung tief schmelzender Vanadium enthaltende Phasen zu verhindern. Die Zuführung von Additiven zur Bekämpfung von Korrosionsund Ablagerungserscheinungen ist auch aus anderen technischen Gebieten bekannt. So wird eine solche Massnahme z.B. in "Einsatz von schwerem Heizöl als Brennstoff für Gasturbinen" in ENERGIE, Jahrgang 28, Nr. 1 Januar 1976 für den Korrosionsschutz von Gasturbinen in Kraftwerken vorgeschlagen.

Diese aus dem Stand der Technik bekannten Möglichkeiten der Zumischung geeigneter Legierungselemente haben jedoch verschiedene erhebliche Nachteile, und haben in Bezug auf bestimmte Legierungen oder Legierungselemente, die zur Bildung der hoch schmelzenden Phase einem Verbrennungsprozess zugeführt werden müssen, lediglich theoretischen Charakter.

So müssten zum Beispiel auf einem Schiff Einrichtungen vorgesehen werden, mit welchen gezielt einem Brennstoff, einem Treibstoff oder einem Schmiermittel geeignete Legierungselemente zugeführt werden können, da diese in den Schmierölen bzw. Brenn- und Treibstoffen nicht in der erforderlichen Menge und / oder Zusammensetzung vorhanden sind. Es versteht sich, dass das mit einem ganz erheblichen zusätzlichen apparativen Aufwand verbunden ist, der insbesondere beispielsweise auf Schiffen unter verfahrenstechnischen und wirtschaftlichen Gesichtspunkten, oder einfach aus Platzgründen kaum vernünftig realisierbar ist.

Zudem ist die Mitführung der notwendigen Legierungselemente mit dem Schmieröl und / oder dem Treibstoff oder Brennstoff nicht in allen Fällen ohne weiteres möglich, da die Legierungselemente z.B. mit dem Schmieröl und / oder dem Treibstoff oder Brennstoff physikalische und / oder chemische Reaktionen eingehen können, die dazu führen, dass das entsprechende Legierungselement dann nicht mehr zur Bildung z.B. der hoch schmelzenden Vanadate zur Verfügung steht. Auch ist es möglich, dass durch die zuvor erwähnten physikalischen und / oder chemischen Reaktionen bestimmte Eigenschaften, z.B. des Schmieröls, so stark verändert werden, dass das Schmieröl zum Beispiel seine schmierende Wirkung ganz oder teilweise verliert, was zu erheblichen Schäden an einer entsprechenden Maschine führen kann. Auch ist es möglich, dass sich durch die Zumischung der Legierungselemente zum Treibstoff und / oder zum Schmieröl physikalisch und / oder chemisch aggressive Stoffe bilden können, die bestimmte Maschinenelemente angreifen und massiv beschädigen können, bevor die Legierungselemente ihre Wirkung zur Bildung hoch schmelzender Vanadiumverbindungen entfalten können.

Auch wenn die zuvor exemplarisch beschriebenen Probleme mit den tief schmelzenden Vanadat Phasen nur ein Beispiel für einen Mechanismus ist, der zu Hochtemperaturkorrosion führt und dem Fachmann eine Vielzahl weiterer Mechanismen und Hochtemperaturkorrosionseffekte bekannt sind, die ebenfalls, und zwar nicht nur in Dieselmotoren, beobachtet werden, und zum Beispiel in den oben genannten Anlagen und / oder an den genannten Komponenten im Betrieb zu den bekannten Korrosionsschäden führen können, so ist das Problem mit den tief schmelzenden Phasen dennoch ein zentrales Problem, dem bisher kaum Beachtung geschenkt wurde und für dessen Lösung es bisher keine wirklich praktikablen Vorschläge gibt.

Dabei soll nochmals ausdrücklich erwähnt werden, dass das Problem der tief schmelzenden Phasen nicht nur in Verbrennungsmaschinen, insbesondere in Zweitakt-Grossdieselmotoren und anderen kleineren Hubkolbenverbrennungsmaschinen auftritt, sondern auch aus vielen anderen technischen Bereichen bekannt ist, wie zum Beispiel bei Verbrennungsanlagen, insbesondere bei Müllverbrennungsanlagen, oder aber auch bei luft- oder landgestützten Turbinen aller Art.

Oberflächenschutzschichten können also zumindest im Prinzip bei grossvolumigen Bauteilen mit einfacher Oberflächengeometrie eine mögliche Lösung zur Abwehr chemischer Angriffe, z.B. durch Hochtemperaturkorrosion darstellen.

Einen Metallschaum auf diese Weise gegen chemische und thermische Angriffe schützen zu wollen scheint dagegen kaum zweckmässig zu sein. Es sollte darüber hinaus technisch kaum möglich sein, einen Stahlmetallschaum mit seinen gewaltigen inneren Oberfläche und den winzigen Schaumstrukturen mit einer schützenden Oberflächenschicht, zum Beispiel durch thermisches Spritzen zu versehen.

Es ist somit eine Aufgabe der Erfindung einen Abgaspartikelfilter für einen Gas, im Speziellen für einen Erdgas und / oder Flüssignaturgas und / oder Schweröl und / oder Marine Dieselöl verbrennenden Dieselmotor, insbesondere für einen Zweitakt-Grossdieselmotor für Schiffe bereitzustellen, der eine ausreichende Wärmeleitfähigkeit aufweist und gleichzeitig widerstandsfähig gegen Hochtemperaturkorrosion durch eine Verbrennungsasche ist, wobei der Korrosionsschutz durch den Einsatz von einigen wenigen gut verfügbaren Materialien bereitgestellt wird, so dass der gegen Hochtemperaturkorrosion resistente Partikelfilter dadurch besonders wirtschaftlich herstellbar ist, und insbesondere gegen Schäden durch Hochtemperaturkorrosionsmechanismen basierend auf tief schmelzenden Phasen wirksam geschützt ist.

Die diese Aufgaben lösenden Gegenstände der Erfindung sind durch die Merkmale der unabhängigen Ansprüche gekennzeichnet.

Die abhängigen Ansprüche beziehen sich auf besonders vorteilhafte Ausführungsformen der Erfindung.

Die Erfindung betrifft somit einen Abgaspartikelfilter für einen Gas, im Speziellen für einen Ergas und / oder Flüssignaturgas und / oder Schweröl und / oder Marine Dieselöl verbrennenden Dieselmotor, insbesondere Zweitakt-Grossdieselmotor. Erfindungsgemäss umfasst dabei der Abgaspartikelfilter ein Filterelement mit einem metallischen Schaumkörper, wobei der metallische Schaumkörper eine Metalllegierung umfasst, die widerstandsfähig gegen Hochtemperaturkorrosion durch eine Verbrennungsasche ist. Im Speziellen ist der metallische Schaumkörper besonders widerstandsfähig gegen schmelzflüssige Bestandteile der Verbrennungsaschen.

Werkstoffe zur Bildung separater Schutzschichten z.B. auf Guss- oder Stahlbauteile, die gegen Hochtemperaturkorrosion, häufig auch einfach als Heisskorrosion oder Heissgaskorrosion bezeichnet werden, sind im Stand der Technik im Prinzip bekannt. Man versteht darunter zum Beispiel Oberflächenschutzschichten, die einen hohen Widerstand gegen Korrosion, insbesondere gegen Oxidation oder Sulfidation bei hohen Temperaturen und in chemisch aggressiven Umgebungen bieten. Sie werden beispielsweise durch thermisches Spritzen hergestellt, wobei MCrAlY-Schichten als Hochtemperaturkorrosionsschutz weit verbreitet sind. Das Metall M kann dabei, wie bereits erwähnt, z.B. Eisen, Kobalt oder Nickel oder eine Legierung dieser oder anderer Metalle sein. Auch Aluminium-Chrom-Schichten, die zum Beispiel durch Chromalitieren gebildet werden, zeigen in vielen Anwendungen eine mehr oder weniger gute Beständigkeit gegen Hochtemperaturkorrosion, insbesondere in sulfathaltigen Medien.

So wird zum Beispiel in der GB 2 196 023 eine Korrosionsschutzbeschichtung auf der Basis von Blei und Zinn vorgeschlagen, die insbesondere einen guten Korrosionsschutz in feuchten und salzhaltigen Umgebungen bietet. In der US 5,496,391 wird eine komplizierte Legierung auf Cu-Ni-Basis als Hochtemperaturkorrosionsschutz vorgeschlagen, die P, B, Si, Cr, Fe und C in bestimmtem Mengenverhältnissen umfasst, und bevorzugt in Form eines Spritzpulver in einem thermischen Spritzprozess auf die Oberfläche eines Werkstücks aufgebracht wird. Eine andere Legierung auf Cu-Ni Basis, die unter anderem Mn, Fe, Si, S und C umfasst, wird als Korrosionsschutz in der JP 02 132 763 vorgeschlagen.

Malik et al. ("Hot Corrosion Behaviour Of Some Industrially Important Nickel-Base Alloys in Presence of Na2SO4(s) and NaCl(s)", Z. Metallkd, Bd. 79, Nr.5 Mai 1988, S. 285 - 295) untersuchten bereits das Hochtemperatur-Korrosionsverhalten handelsüblicher Legierungen, wie Inconel, Incoly oder verschiedener Nimonic Legierungen, die sämtlich Legierungen auf Ni-Basis darstellen und weitere Bestandteile wie Fe, Cr, Al, Co, Mo, C usw. in verschiedenen Konzentrationen enthalten können.

Damit verwandte Ni-Basis-Legierungen werden in der US 4,019,900 insbesondere als guter Schutz gegen Oxidation beschrieben.

Wie bereits erwähnt, kann das Phänomen der Hochtemperaturkorrosion dabei überall dort auftreten, wo relativ hohe Prozesstemperaturen von einigen 100°C bis weit über 1000°C herrschen, wobei häufig nicht nur die hohen Temperaturen als solches für das Auftreten korrosiver Effekte verantwortlich sind, sondern auch chemisch aggressive Umgebungsbedingungen anzutreffen sind, die zum Beispiel auf Verbrennungsprodukte oder andere chemische Reaktionsprodukte zurückzuführen sind oder auch von Beimischungen in Brennstoffen, Schmiermitteln usw. hervorgerufen werden können.

Somit sind nicht nur Bauteile und Maschinenkomponenten, die in mehr oder weniger direktem Kontakt mit Verbrennungsvorgängen stehen, von Hochtemperaturkorrosion bedroht, wie etwa Kolbenoberflächen von Kolben in Brennkraftmaschinen, Zylinderwände, Zylinderdeckel, Einspritzdüsen, Gaswechselventile, sondern auch die Komponenten der Abgassysteme von Brennkraftmaschinen, wie zum Beispiel Turbolader, insbesondere auch Turbinenteile und / oder die Abgas Zu- oder Abführung von Abgas- und Turbolader-Systemen.

Somit ist natürlich insbesondere ein Abgaspartikelfilter ebenfalls von Hochtemperaturkorrosion durch die herausgefilterte Partikel und Verbrennungsaschen bedroht. Das umso mehr, als das der Abgaspartikelfilter, wie z.B. aus der Automobiltechnik bekannt, von Zeit zu Zeit von den abgelagerten Feststoffen, also den Abgaspartikeln und den Verbrennungsaschen durch Freibrennen befreit werden muss, da er ansonsten nach relativ kurzer Zeit von den ausgefilterten Feststoffen verstopft wäre und damit nicht mehr funktionstüchtig wäre.

Aus dem regelmässig notwendigen Freibrennen des Abgaspartikelfilters mittels einer dafür vorgesehenen Freibrenneinrichtung resultiert ein zentrales Problem, wenn niederwertige Kraftstoffe, wie z.B. Flüssignaturgas oder gar Schweröl als Treibstoff verwendet werden. Diese Treibstoffe bilden beim Verbrennen nämlich neben anderen schädlichen Abfallprodukten Verbrennungsaschen, die tiefschmelzende Phasen enthalten können. Als chemisch besonders aggressiv haben sich dabei verschiedene tiefschmelzende Vanadatphasen herausgestellt.

Unter solchen tiefschmelzenden Phasen, die z.B. in den Verbrennungsaschen enthalten sein können, versteht man Phasen, die Schmelzpunkte von einigen 100°C bis über 1000°C haben können. Die zuvor erwähnten Vanadatphasen können dabei auch schon bei 400°C oder weniger schmelzen, je nach chemischer Zusammensetzung oder Verunreinigungen.

Dabei sind die ungeschmolzenen Phasen, also so lange sie im festen Zustand in der Verbrennungsasche vorliegen, häufig sogar wenig aggressiv, sondern entfalten ihre chemisch korrosiven Eigenschaften erst im aufgeschmolzenen Zustand.

Beim Freibrennen eines Abgaspartikelfilters entstehen jedoch problemlos, zumindest kurzfristig Temperaturen, bei welchen die schädlichen tiefschmelzenden Phasen schmelzen können, also in den flüssigen Zustand übergehen und dann einen bekannten Partikelfilter, wie zum Beispiel den PKW-Partikelfilter der DE 102 45 510 A1 in kürzester Zeit durch Hochtemperaturkorrosion, ausgelöst durch die Verbrennungsaschen, zerstören würde.

Speziell in Bezug auf die Problematik tiefschmelzender Phasen in Verbrennungsaschen haben Schlager et al. ("Protection Against High Temperature Corrosion With Laser Welded Claddings-Applied And Tested On Exhaust Valve Discs Of Large Diesel Engines Burning Heavy Fuel Oil", Materials and Corrosion 53, 103 -110 (2002)) die schützende Wirkung verschiedene Funktionsschichten aus Nickel-Basis-Legierungen auf Auslassventilen von Grossdieselmotoren gestestet, die unter anderem verschiedene Mengen von Chrom enthalten.

Im Folgenden soll die Bedeutung der schmelzflüssigen Phasen für das Phänomen der Hochtemperaturkorrosion etwas ausführlicher untersucht werden. Diese schmelzflüssigen Phasen können insbesondere bei Verbrennung von Schweröl unter anderem Vanadate enthalten, wie zum Beispiel Natriumvanadylvanadate, die unter anderem röntgenographisch nachweisbar sind.

Dieses Phänomen wurde zum Beispiel von Schlager in dem Artikel "Materialabtrag an Kolben von Grossdieselmotoren", MTZ Motortechnische Zeitschrift, 55 (1994) Mai, No. 5, S. 300 eingehend untersucht.

Beim Betrieb eines Dieselmotors kann die Aufschmelzung, das heisst das Auftreten der schmelzflüssigen Phasen wie bereits erwähnt spätestens ab ca. 400°C beobachtet werden. Solche schmelzflüssigen Phasen sind unter anderem in der Lage, quasi natürlich auf einem Metall aufgewachsene schützende Oxidschichten chemisch aufzuschliessen, so dass das darunter liegende Metall schutzlos einem Angriff durch Hochtemperaturkorrosion ausgeliefert ist.

Dabei sind die zuvor exemplarisch beschriebenen Probleme mit den schmelzflüssigen Vanadat Phasen nur ein Beispiel für einen Mechanismus, der zu Hochtemperaturkorrosion führt. Dem Fachmann sind eine Vielzahl weiterer Mechanismen und Heisskorrosionseffekte bekannt.

Bereits in der EP 1 752 561 A1 konnte gezeigt werden, dass z.B. eine einfache Legierung aus Kupfer und Nickel gegen relevante Hochtemperaturkorrosionsmechanismen, insbesondere, aber nicht nur, gegen beim Betrieb eines Grossdieselmotors auftretenden relevanten Hochtemperaturkorrosionsmechanismen in hervorragender Weise gleichzeitig Schutz bietet. Insbesondere die schädlichen Wirkungen der bei der Schwerölverbrennung auftretenden schmelzflüssigen Vanadat Phasen werden durch einen Hochtemperaturkorrosionsschutz aus einer Legierung aus Cu und Ni wirksam vermieden oder zumindest stark reduziert.

Dabei hat sich der Hochtemperaturkorrosionsschutz gemäss der EP 1 752 561 A1 als so vielseitig in Bezug auf die verschiedenen bekannten Hochtemperaturkorrosionsmechanismen herausgestellt, dass der Hochtemperaturkorrosionsschutz aus einer Legierung aus Cu und Ni über weite Temperaturbereiche von einigen wenigen 100°C, zum Beispiel ab 200°C bis zu hohen Temperaturen von 900°C, über 1200°C und sogar bis über 1400°C, unter den verschiedensten Betriebsbedingungen und in ganz unterschiedlichen chemischen Umgebungen, vorteilhaft zur Verhinderung oder Reduzierung von Hochtemperaturkorrosion einsetzbar ist.

Dabei konnte durch die vorliegende Erfindung gezeigt werden, dass auch noch weitere Klassen von speziellen Legierungen, wie sie weiter unten beschrieben und aufgelistet sind, einen ähnlich effektiven Schutz gegen Hochtemperaturkorrosion, insbesondere gegen tiefschmelzende Phasen bilden.

Allerdings war man bisher der Auffassung, dass sich metallischen Schäume in genügender Qualität mit diesen komplizierten Legierungen nicht herstellen lassen.

Bei der Herstellung von metallischen Schäumen ist es nämlich absolut notwendig, dass vor allem homogene Gefügezustände in den Schäumen erreicht werden und die Bildung von z.B. Eutektika oder unvorteilhaften Ausscheidungen vermieden wird. Eutektika sind bekanntermassen tiefschmelzende Mischungsverhältnisse von einem oder mehreren der Legierungselemente, aus denen der Metallschaum hergestellt ist. Das heisst, solche eutektischen Bereiche unterscheiden sich von der mittleren chemischen Zusammensetzung des Materials. Ausscheidungen können dabei Schwachstellen im Material repräsentieren.

Bei der Bildung von massiven Oberflächenschichten, wie sie z.B. zum Schutz gegen Heisskorrosion auf eine Kolbenoberfläche aufgebracht werden, gelingt es durch an sich bekannte Massnahmen, die Bildung z.B. eutektischer Bereiche oder Ausscheidungen zumindest so weit zu unterdrücken, dass diese keine wesentlichen Angriffszonen für Hochtemperaturkorrosion mehr bilden.

Insbesondere wenn die entsprechenden Bauteile zum Beispiel durch thermisches Spritzen mit thermischen Spritzschichten aus diesen Legierungen beschichtet werden, wird die Bildung von Eutektika und / oder ungewollten Ausscheidungen schon durch die thermische Spritzmethode als solches unterdrückt, da die aufgespritzten Schichten so schnell abkühlen, das die Ausbildung von Eutektika und / oder unerwünschten Ausscheidungen verhindert wird.

Beim Herstellen von Metallschäumen, wie es weiter unten noch ausführlicher beschrieben wird, liegen die Verhältnisse dagegen völlig anders.

Die Schäume kühlen verhältnismässig langsam beim Aufschäumen aus der flüssigen Phase in die feste Phase ab. Die Schäume werden sozusagen freistehend im Raum erzeugt, also nicht auf irgendwelche Werkstücke abgeschieden sondern als frei stehende Schaumkörper erzeugt. Dadurch wird einerseits beim Abkühlen die Wärme schlecht abgeführt, da kein unmittelbarer Wärmekontakt mit einem Substrat besteht, was dazu führt, dass die Legierungen relativ viel Zeit zum entmischen und damit zur Bildung von Eutektika und / oder unerwünschten Ausscheidungen haben. Anderseits wird das Erstarren der Schmelze auch nicht durch eine Oberfläche eines Substrats mit bestimmt, die unter Umständen auf Grund von Oberflächeneffekten Ausscheidungen entgegenwirken kann.

So sind die hier in Frage stehenden Legierungen auch dafür bekannt, dass sie im allgemeinen, insbesondere bei relativ langsamen Abkühlen aus der flüssigen Phase in die feste Phase Eutektika und / oder unerwünschte Ausscheidungen bilden können und damit für die Herstellung von Metallschäumen für Abgaspartikelfilter grundsätzlich ungeeignet schienen.

Wenn sich in den Metallschäumen nämlich die oben beschrieben Eutektika und / oder unerwünschten Ausscheidungen bilden, führt das dazu, dass ein daraus hergestellter Partikelfilter in Bezug auf zwei wesentliche Mechanismen instabil wäre. Erstens hat ein solcher metallischer Schaumkörper natürlich keinen einheitlichen Schmelzpunkt mehr. Vielmehr wird es durch die inhomogenen Gefügezustände Bereiche geben, die einen erheblich niedrigeren Schmelzpunkt haben als andere Bereiche. Das führt dazu, dass der Partikelfilter an diesen Stellen z.B. beim Verbrennen der abgelagerten Aschen und Partikel schmelzen könnte oder insgesamt instabil wird und zerstört wird.

Anderseits werden bestimmte Ausscheidungsgebiete, je nach lokaler chemischer Zusammensetzung, nicht mehr genügend resistent gegen die chemischen Angriffe durch Hochtemperatur sein, und insbesondere beim Verbrennen der abgelagerten Aschen und Partikel chemisch zerstört werden, selbst wenn die entsprechenden Bereiche noch einen genügend hohen Schmelzpunkt haben.

Daher war es bisher klar, dass diese Legierungen zur Bildung von metallischen Schäumen zur Verwendung in Abgaspartikelfiltern nicht verwendet werden können, insbesondere nicht, wenn extreme chemische Angriffe von tiefschmelzenden Phasen zu erwarten sind.

Überraschenderweise hat sich in aufwendigen Versuchen durch die vorliegende Erfindung herausgestellt, dass bei geeigneter Wahl der Zusammensetzung der Legierungen diese nicht nur gegen Hochtemperaturkorrosion im wesentlichen resistent sind, sondern dass sich bei geeigneter Wahl der chemischen Zusammensetzung auch metallische Schäume bilden lassen, die keine wesentlichen Anzeichen von unerwünschten Ausscheidungen und Eutektika zeigen, so dass es durch die vorliegende Erfindung erstmals möglich ist, metallische Abgaspartikelfilter zur Verfügung zu stellen, die eine ausreichend hohe Wärmeleitfähigkeit haben, so dass insbesondere beim Verbrennen abgelagerter Aschen und Partikel die entstehende Wärme zuverlässig abgeführt werden kann und andererseits der metallische Schaum auch in hervorragender Weise widerstandsfähig gegen Hochtemperaturkorrosion ist, so dass der Partikelfilter auch in Maschinen verwendet werden kann, die mit hochgradig verunreinigten Treibstoffen von niedriger Qualität betrieben werden, wie beispielweise Zweitakt-Grossdieselmotoren, die mit Schweröl betrieben werden.

Die vorgenannten anti-korrosiven Effekte der erfindungsgemäss hergestellten metallischen Schäume konnte durch entsprechende Versuche mit synthetischen Aschen einwandfrei bestätigt werden, die zum z.B. ca. 20% Na₂Co₃ und 80% V₂O₅ enthielten und mit 15%CaSo4 in 0.5H₂O versetzt waren. Unter synthetischer Luft mit 10%H₂O, Sättigung bei 50°C und bei Temperaturen von ca. 600°C durchgeführt.

Dabei liessen sich sowohl unter Dauertestbedingungen als auch unter periodischem Heizen, wie es realistischerweise zum Beispiel im Betriebszustand eines Grossdieselmotors zu erwarten ist, selbst nach 500h und mehr keinerlei Schäden durch die hohe Temperatur oder durch Hochtemperaturkorrosion beobachten.

In einem speziellen Ausführungsbeispiel ist der metallische Schaumkörper aus einer Metalllegierung, insbesondere aus einer pulvermetallurgisch hergestellten Metalllegierung gefertigt, wobei die Metalllegierung eine Eisen-Legierung mit einem Chromgehalt von mindestens 20%-Masseprozent Cr ist.

Neben solchen Eisenlegierungen kommt als Metalllegierung auch z.B. eine Titan-Legierung, insbesondere eine TiAl umfassende TiAl-Legierung in Frage, wobei bevorzugt die TiAl-Legierung eine Titan-Basislegierung ist und der Titan Gehalt grösser oder gleich als 50% Gewichtsprozent ist, bevorzugt über 70%-Masseprozent, insbesondere über 80%-Masseprozent, im speziellen über 90%-Massesprozent der TiAl-Legierung beträgt.

Als weitere geeignete Legierung zur Herstellung eines erfindungsgemässen Abgaspartikelfilters kann eine Kobalt-Legierung, insbesondere eine CoCr umfassende CoCr-Legierung und / oder eine CoMo umfassende CoMo-Legierung verwendet werden, wobei CoCr-Legierung und / oder die CoMo-Legierung eine Kobalt-Basislegierung ist und der Kobalt Gehalt grösser oder gleich als 50% Gewichtsprozent ist, bevorzugt über 70%-Masseprozent, insbesondere über 80%-Masseprozent, im speziellen über 90%-Massesprozent der CoCr-Legierung beträgt.

Eine weitere Klasse von Metalllegierungen, mit welchen ein erfindungsgemässer Abgaspartikelfilter hergestellt werden kann, ist eine Nickel-Legierung, insbesondere eine NiCu umfassende NiCu-Legierung und / oder eine NiCr umfassende NiCr-Legierung, im Speziellen eine Inconel 671-Legierung und / oder eine Inconel 693-Legierung.

Dabei kann die NiCu-Legierung beispielsweise eine Nickel-Basislegierung sein, wobei der Nickel Gehalt grösser oder gleich als 50% Gewichtsprozent ist, bevorzugt über 70%-Masseprozent, insbesondere über 80%-Masseprozent, im speziellen mehr als 90%-Massesprozent der NiCu-Legierung beträgt.

Auch die weiter oben erwähnt NiCr-Legierung kann in einem speziellen Ausführungsbeispiel eine Nickel-Basislegierung sein, wobei der Nickel Gehalt grösser oder gleich als 50%-Masseprozent ist, bevorzugt über 70%-Massesprozent, insbesondere über 80%-Masseprozent, im speziellen über 90%-Masseprozent der NiCu-Legierung ist.

Je nach Anforderungen kann die NiCu-Legierung auch eine Kupfer-Basislegierung sein, wobei der Kupfer Gehalt grösser oder gleich als 50%-Masseprozent ist, bevorzugt über 70%-Masseprozent, insbesondere über 80%-Masseprozent, im speziellen mehr 90%-Masseprozent der NiCu-Legierung beträgt.

Vorteilhaft kann auch eine NiCr-Legierung, die eine Chrom-Basislegierung ist für einen erfindungsgemässen Abgaspartikelfilter verwendet werden, wobei der Chrom Gehalt grösser oder gleich als 50%-Masseprozent ist, bevorzugt über 70%-Masseprozent, insbesondere über 80%-Masseprozent, im speziellen über 90%-Masseprozent der NiCr-Legierung beträgt.

Insbesondere um den erfindungsgemässen Partikelfilter gegen die tiefschmelzenden Phasen, vor allem auch gegen die tiefschmelzenden Vanadat Phasen widerstandsfähig zu machen, kann eine Metalllegierung, die zur Herstellung eines metallischen Schaums für den erfindungsgemässen Partikelfilter verwendet wird, eines oder mehrere der Elemente bestehend aus der Gruppe der Elemente Ca, Mg, Ta, Y, Ti, Al, C, Mo, W, Zr, Fe, Nb, Sn, O, Cr, La, Ce, Hf, Cu, Pb, N, Na, Zn, Mn, P, B, Si, Ni und Co umfassen.

Der Anteil eines oder mehrerer der Elemente aus der Gruppe Ca, Mg, Ta, Y, Ti, Al, C, Mo, W, Zr, Fe, Nb, Sn, O, Cr, La, Ce, Hf, Cu, Pb, N, Na, Zn, Mn, P, B, Si, Ni und Co liegt dabei bevorzugt zwischen 0.01 %-Masseprozent und 90%-Masseprozent, insbesondere zwischen 0.1 %-Masseprozent und 80%-Masseprozent, im Speziellen zwischen 2%-Masseprozent und 70%-Masseprozent, bevorzugt zwischen 3% und 50%-Masseprozent, oder bei ca. 6%-Masseprozent.

In den nachfolgenden Tabelle 1 und Tabelle 2 ist eine Auswahl ganz bestimmter Metalllegierungen aufgeführt, die sich besonders gut zur Herstellung eines metallischen Schaums für einen erfindungsgemässen Abgaspartikelfilter eignen. Es versteht sich, dass diese Liste nicht als abschliessend zu verstehend ist und dem Fachmann ist klar, dass auch ähnliche Metalllegierungen, die der chemischen Definition der vorliegenden Anmeldung genügen, sich zur Herstellung eines metallischen Schaums für einen erfindungsgemässen Abgaspartikelfilter eignen können.

**Tabelle 1: eine erste Auswahl von Metalllegierungen, die sich besonders für die Herstellung eines erfindungsgemässen Partikelfilters eignen.**

| | |
|---|---|
| NIMONIC 70 | Ni 21 Cr 25Fe 1.5Nb 1.25Tl 1.0Al 0.06C |
| NIMONIC 70 | Ni 19Cr 25Fe 1.5Nb 1.2Ti 1.0Al 0.06C |
| NIMONIC 80A (Cast 1) | Ni 20Cr 0.28Co 0.12Mo 2.4Ti 1.2Al 0.08C 0.2Si 0.08Mn |
| NIMONIC 80A (Cast2) | Ni 20Cr 0.03Co 0.01 Mo 2.4Ti 1.4Al 0.12C 0.1Si |
| NIMONIC 81 | Ni 30Cr 1.75Ti 0.9Al 0.05C |
| NIMONIC 91 | Ni 28.5Cr 20Co 2.3Ti 1.2Al 0.75Mo 0.05C |
| Udimet 520 | Ni 19Cr 12Co 6Mo 3.0Ti 2.0Al 1.0W 0.05C |
| Udimet 720 | Ni 18Cr 15Co 5.0 Ti 3.0Mo 2.5Al 1.25W 0.03C |
| Inconel 718 | Ni 19Cr 18Fe 5.2Nb 3.0Mo 1.0Ti 0.55Al 0.04C |
| Inconel 718A | Ni 19Cr 3.0Mo 0.9Ti 0.5Al 0.03C 5.3Nb 18Fe |
| Inconel 738 | Ni 16Cr 8.5Co 3.4Al 3.4Ti 2.6W 1.8Ta 1.80Mo 0.9Nb 0.1 C 0.04Zr |
| IN 738LC | Ni 16Cr 8.5Co 1.7Mo 3.4Ti 3.4Al 0.17C 0.9Nb 2.6W 1.7Ta |
| Inconel 739 | Ni 22Cr 19Co 3.7Ti 2.0W 1.9Al 1.4Ta 1.0Nb 0.15C 0.12Zr |
| Inconel 671 | Ni 45Cr 0.3Ti 0.05C |
| Inconel MA754 | Ni 20Cr 0.5Ti 0.3Al 0.6Y₂O₃ |
| Inconel MA757 | Ni 16Cr 4.5Al 0.5Ti 0.6Y₂O₃ |
| Inconel MA758(30Cr) | Ni 30Cr 0.5Ti 0.3Al 0.6Y₂O₃ |
| Inconel MA758(35Cr) | Ni 35Cr 0.5Ti 0.3Al 0.6Y₂O₃ |
| IMI 829 | Ti 5.5Al 3.0Sn 3.0Zr 1.0Nb 0.3Si 0.25Mo |
| IMI 834 | Ti 5.8Al 4.5Sn 4.0Zr 0.7Nb 0.5Mo 0.4Si 0.06C |
| FerroTiC MS-5a | FeCrNi Matrix mit 45v/o TiC |
| Ferro TiC HT2 | NiFeCr Matrix mit 45v/o TiC |
| Ferro TiC Hat-6A | NiCr Matrix mit 40v/o TiC |
| AiResist213 | Co 19Cr 6.5Ta 4.7W 3.4Al 0.2C 0.2Zr 0.1 Y |
| FeCrAlloy AB | Fe 20Cr 5Al 0.3Si 0.01 Y 0.03C |
| FeCrAlloy 49 | Fe 14.3Cr 4.2Al 0.15Mn 0.11Ni 0.1 Si |
| FeCrAlloy 51 | Fe 15.1Cr 4.1Al 0.86Y 0.38Ni 0.18Si 0.15Mn |
| En52 | Fe 8.5Cr 3.4Si 0.5Ni 0.45C |
| EN52 | Fe 9Cr 0.5C 3.5Si 0.5Mn |
| Fe 21 Cr 4Ni N (BS349 S52) | Fe 21 Cr 9Mn 4Ni 0.52C 0.45N 0.15Si |
| TRWEx | Fe 25Cr 10Ni 1.0Mn + Andere |
| Cogne VA70 | Fe 23Cr 8Ni 2.5Mn 1.2Nb 1.0Mo 1.0V 0.6C 0.5N 0.2Si |
| Stellite 6 | Co 27Cr 5W 2.5Fe 2.5Ni 1.0Si 1.0C |
| Stellite 12 | Co 30Cr 9W 2.5Fe 2.5Ni 1.9C 1.0Si |
| Triballoy T700 | Ni 32Mo 15Cr 3.3Si 1.0Fe 0.1C |
| Triballoy T800 | Co 28Mo 17Cr 3.2Si 1.0Fe 0.1 C |
| Tristelle TS2 | Fe 35Cr 12Co 10Ni 5Si 2.0C |
| Tristelle TS3 | Fe 35Cr 12Co 10Ni 5Si 3.0C |
| VMS 585 | Fe 25Cr 11 Ni 5Mo 2.2C 1.0Si |
| Colmonoy 8 | Ni 26Cr 4Si 3.3B 1.0Fe 0.95C |
| Colmonoy 52 | Ni 11.5Cr 4.25Fe 3.75Si 2.5B 0.65C |
| Colmonoy 56 | Ni 12.5Cr 4.5Fe 4.0Si 2.75B 0.7C |
| Colmonoy 72 | Ni 13W 12Cr 3.6Si 3.5Fe 2.7B 0.75C |
| Colmomoy 4278 | Ni 31 Cr 9W 3.0Fe 2.4Si 1.4C 1.1B |
| Amdry 761 | Ni 14Cr 4.5Fe 4.4Si 3.15B 0.65C |
| Amdry 995 | Co 32Ni 21 Cr 8Al 0.5Y |
| Amdry 350 | Ni 50Cr |
| LCO 22 | Co 32Ni 21 Cr 8Al 0.5Y |
| LCO 37 | Co 23Ni 30Cr 3Al 0.5Y |
| ATD 2B | CoCrAlY |
| ATD 7 | 23C 46Ni 18Cr 12.5Al 0.3Y |
| ATD 8 | NiCRAlY |
| WC1 | Ni 20Cr 10 Si |
| MA 754 | Ni 16Cr 0.6Y und Ti, Al |
| MA 757 | Ni 16Cr 4.5Al 0.6Y |
| MA 758/35 | Ni 35Cr 0.5Ti 0.3Al 0.05C 0.6Y |
| MA 758/30 | Ni 30Cr 0.5Ti 0.3Al 0.05C 0.6Y |
| VA 70 | Fe 23Cr 1.0Mo 0.6C 0.2Si 2.5Mn 1.2Nb 8Ni 1 V 0.5N |

**Tabelle 2: eine zweite Auswahl von Metalllegierungen mit genauer Bezeichnung der Legierungen und Herstellerfirma, die sich besonders für die Herstellung eines erfindungsgemässen Partikelfilters eignen.**

| **Name** | **Ni** | **Co** | **Fe** | **Cr** | **Al** | **Si** | **Mo** | **W** | **SE** | **Y** | **Ti** | **Firma** |
|---|---|---|---|---|---|---|---|---|---|---|---|---|
| Nimonic 80a | Rest | 2 | 3 | 18-21 | 1-1.8 | 1 | | | | | 1.8-2.7 | Inconel |
| Haynes 230 | 57 | 5 | 3 | 22 | 0.3 | 0.4 | 2 | 14 | La 0.02 | | | Haynes |
| Haynes 188 | 22 | 39 | 3 | 22 | | 0.35 | | 14 | La 0.03 | | | Haynes |
| Alloy 6025 | Rest | | 8-11 | 24-26 | 1.8-2.4 | | | | 0.05-0.12 | | 0.2 | VDM |
| Nimonic 86 | 65 | | | 25 | | | 10 | | 0.03 | | | Inconel |
| Nimonic 81 | Rest | | 1 | 30 | 0.9 | 0.5 | | | | | 1.8 | Inconel |
| Inconel 671 | Rest | | | 48 | | | | | | | | Inconel |
| Inconel 589 | 48 | | | 50 | | | | | Zr 1.5 | | | Inconel |
| PM 1500 | Rest | | | 30 | 0.3 | | | | | 0.6 | 0.5 | Plansee |
| 45TM | 45 | | 21-25 | 26-29 | | 2.5-3 | | | 0.05-0.15 | | | VDM |
| Haynes 160 | Rest | 29 | 2 | 28 | | 2.7 | | | | | | Haynes |
| Nicrofer 6125 GT | Rest | | 8-11 | 24-26 | 2.4-3 | | | C:0.2-0.4 | Zr | 0.01-0.15 | ja | VDM |
| Haynes 214 | Rest | | 3 | 16 | 4.5 | | | | | ja | | Haynes |
| Nimonic 105 | Rest | 18-22 | | 14-15.7 | 4.5-4.9 | | 4.5-5.5 | | | | 0.9-1.5 | Inconel |
| Nimonic 115 | Rest | 13-15.5 | | 14-16 | 4.5-5.5 | | 3-5 | | | | 3.5-4.5 | Inconel |
| PM 3030 | Rest | | | 17 | 6 | | 2 | 3.5 | Zr: 0.15 | 0.9 | Ta:2 | Plansee |
| Stellite 306 | 5 | Rest | | 25 | | | | 2 | C:0.4 | Nb:6 | | Stellite |
| Stellite 506 | | Rest | | 35 | | | | 7.5 | C:1.6 | | | Stellite |
| Stellite 21 | | Rest | | 28 | | | 5 | | C:0.25 | | | Stellite |
| Stellite 4 | | Rest | | 30 | | | | 13 | C:1 | | | Stellite |
| Stellite 12P | | Rest | | 31 | | | | 9 | C:1.4 | | | Stellite |
| Stellite 12P | | Rest | | 28 | | | | 9 | C:1.8 | | | Stellite |
| Stellite 250 | | Rest | 20 | 28 | | | | | C:0.1 | Nb:2 | | Stellite |
| Stellite 251 | | Rest | 18 | 28 | | | | | C:0.3 | Nb:2 | | Stellite |
| Nicrofer 6025 HT | | | 8-11 | 24-26 | 1.8-2.4 | | | Zr:0.01-0.1 | C:0.15-0.25 | 0.05-0.12 | 0.1-0.2 | VDM |

In ganz speziellen Fällen kann der metallische Schaumkörper für einen erfindungsgemässen Abgaspartikelfilter auch einen Oxidationskatalysator und / oder Zeolithe zum Cracken der Kohlenwasserstoffe und zum Reduzieren der Stickoxide als Inseln innerhalb der Metallschaumstruktur aufweisen.

Besonders bevorzugt umfasst ein Abgaspartikelfilter gemäss der vorliegenden Erfindung mehrere metallische Schaumkörper mit unterschiedlichen mittleren Porengrössen, die in einem Gehäuse des Abgaspartikelfilters in Serie angeordnet sind, wobei die Porengrösse in Strömungsrichtung des Abgases abnimmt.

Der metallische Schaumkörper kann dabei eine Porosität von mehr als 60% haben, im Speziellen von mehr als 80%, bevorzugt von mehr als 90%.

Zum Verbrennen von abgelagerten Abgaspartikeln und Verbrennungsaschen kann dabei am Abgaspartikelfilter zusätzlich in an sich bekannter Weise eine Freibrenneinrichtung vorgesehen sein, die insbesondere so ausgestaltet sein kann, dass sie sich zum periodischen Verbrennen der abgelagerten Abgaspartikel und Verbrennungsaschen eignet.

Die Erfindung betrifft weiterhin ein Verfahren zum Herstellen eines Abgasfilters gemäss der vorliegenden Erfindung.

Bevorzugt wird der metallische Schaumkörper pulvermetallurgisch herstellt, wobei eine Aufschlämmung aus einem Pulver einer Metalllegierung und einem Dispergiermittel aufgeschäumt wird, in eine Form zur Bildung eines Formkörpers verbracht wird, und der Formkörper gesintert wird.

Der Aufschlämmung kann dabei mit einem Dispergiermittel, und / oder einem Bindemittel und / oder einem oberflächenaktiven Mittel, insbesondere einem Tensid aufschäumt werden, wobei die Aufschlämmung bevorzugt durch Führen aufgeschäumt wird und / oder als Dispergiermittel gleichzeitig ein Tensid verwendet, und / oder wobei in der Aufschlämmung ein Entschäumer eingesetzt wird.

Die Entwässerung kann durch gleichzeitige oder zeitlich nacheinander vorgenommene Anwendung von Druck und Elektrophorese durchgeführt werden, wobei die Entwässerung beispielweise nur durch die Anwendung von Druck durchgeführt wird, oder wobei die Entwässerung nur durch die Anwendung von Elektrophorese durchgeführt wird.

Im Speziellen kann die Aufschlämmung einen Glasbildner enthalten, und / oder als Glasbildner einen salzartigen Glasbildner, insbesondere ein Silicat, und / oder einen säureartigen Glasbildner, insbesondere eine Borsäure und / oder eine Phosphorsäure und / oder eine alkalische Verbindung, insbesondere Natronlauge, und / oder eine Verbindungen dieser Säuren und / oder Basen verwendet werden.

Vorteilhaft kann als Dispergiermittel eine Substanz verwendet wird, die gleichzeitig als Bindemittel und / oder als Katalysator verwendet wird.

Bei der Herstellung des metallischen Schaumkörpers kann in an sich bekannter Weise eine elektrisch leitende, aus porösem Kunststoff bestehende Druckgiessform als eine erste Elektrode verwendet werden, und / oder eine poröse metallische Druckgiessform als eine zweite Elektrode verwendet werden, wobei bevorzugt die Druckgiessform als Anode verwendet wird.

Die in der Giessform befindliche Aufschlämmung wird während der Entwässerung auf einer Temperatur von mindestens 50 °C gehalten, wobei der Formkörper nach der Entnahme aus der Giessform und vor dem Sintern bei ca. 20°C getrocknet wird.

## Patentansprüche

1. Abgaspartikelfilter für einen Gas, im Speziellen Ergas und / oder Flüssignaturgas und / oder Schweröl und / oder Marine Dieselöl verbrennenden Dieselmotor, insbesondere Zweitakt-Grossdieselmotor, **dadurch gekennzeichnet, dass** der Abgaspartikelfilter ein Filterelement mit einem metallischen Schaumkörper umfasst, wobei der metallische Schaumkörper eine Metalllegierung umfasst, die widerstandsfähig gegen Hochtemperaturkorrosion durch eine Verbrennungsasche ist.

2. Abgaspartikelfilter nach Anspruch 1, wobei der metallische Schaumkörper widerstandsfähig gegen schmelzflüssige Bestandteile der Verbrennungsasche ist.

3. Abgaspartikelfilter nach Anspruch 1 oder 2, wobei der metallische Schaumkörper aus einer Metalllegierung, insbesondere aus einer pulvermetallurgisch hergestellten Metalllegierung gefertigt ist, wobei die Metalllegierung eine Eisen-Legierung mit einem Chromgehalt von mindestens 20%-Masseprozent Cr ist.

4. Abgaspartikelfilter nach einem der vorangehenden Ansprüche, wobei die Metalllegierung eine Titan-Legierung, insbesondere eine TiAl umfassende TiAl-Legierung ist, und / oder wobei die TiAl-Legierung eine Titan-Basislegierung ist und der Titan Gehalt grösser oder gleich als 50% Gewichtsprozent ist, bevorzugt über 70%-Masseprozent, insbesondere über 80%-Masseprozent, im speziellen über 90%-Massesprozent der TiAl-Legierung beträgt.

5. Abgaspartikelfilter nach einem der vorangehenden Ansprüche, wobei die Metalllegierung eine Kobalt-Legierung, insbesondere eine CoCr umfassende CoCr-Legierung und / oder eine CoMo umfassende CoMo-Legierung ist, und / oder wobei die CoCr-Legierung eine Kobalt-Basislegierung ist und der Kobalt Gehalt grösser oder gleich als 50% Gewichtsprozent ist, bevorzugt über 70%-Masseprozent, insbesondere über 80%-Masseprozent, im speziellen über 90%-Masseprozent der CoCr-Legierung beträgt.

6. Abgaspartikelfilter nach einem der vorangehenden Ansprüche, wobei die Metalllegierung eine Nickel-Legierung, insbesondere eine NiCu umfassende NiCu-Legierung und / oder eine NiCr umfassende NiCr-Legierung, im Speziellen eine Inconel 671-Legierung und / oder eine Inconel 693-Legierung ist.

7. Abgaspartikelfilter nach Anspruch 6, wobei die NiCu-Legierung eine Nickel-Basislegierung ist und der Nickel Gehalt grösser oder gleich als 50% Gewichtsprozent ist, bevorzugt über 70%-Masseprozent, insbesondere über 80%-Masseprozent, im speziellen über 90%-Masseprozent der NiCu-Legierung beträgt.

8. Abgaspartikelfilter nach Anspruch 6, wobei die NiCr-Legierung eine Nickel-Basislegierung ist und der Nickel Gehalt grösser oder gleich als 50%-Masseprozent ist, bevorzugt über 70%-Masseprozent, insbesondere über 80%-Masseprozent, im speziellen über 90%-Masseprozent der NiCr-Legierung beträgt.

9. Abgaspartikelfilter nach Anspruch 6, wobei die NiCu-Legierung eine Kupfer-Basislegierung ist und der Kupfer Gehalt grösser oder gleich als 50%-Masseprozent ist, bevorzugt über 70%-Masseprozent, insbesondere über 80%-Masseprozent, im speziellen über 90%-Masseprozent der NiCu-Legierung beträgt.

10. Abgaspartikelfilter nach Anspruch 6, wobei die NiCr-Legierung eine Chrom-Basislegierung ist und der Chrom Gehalt grösser oder gleich als 50%-Masseprozent ist, bevorzugt über 70%-Masseprozent, insbesondere über 80%-Masseprozent, im speziellen über 90%-Masseprozent der NiCr-Legierung beträgt.

11. Abgaspartikelfilter nach einem der vorangehenden Ansprüche, wobei die Metalllegierung eines oder mehrere der Elemente bestehend aus der Gruppe der Elemente Ca, Mg, Ta, Y, Ti, Al, C, Mo, W, Zr, Fe, Nb, Sn, O, Cr, La, Ce, Hf, Cu, Pb, N, Na, Zn, Mn, P, B, Si, Ni und Co umfasst, und / oder wobei der Anteil eines oder mehrerer der Elemente aus der Gruppe Ca, Mg, Ta, Y, Ti, Al, C, Mo, W, Zr, Fe, Nb, Sn, O, Cr, La, Ce, Hf, Cu, Pb, N, Na, Zn, Mn, P, B, Si, Ni und Co zwischen 0.01 %-Masseprozent und 90%-Masseprozent, insbesondere zwischen 0.1 %-Masseprozent und 80%-Masseprozent, im Speziellen zwischen 2%-Masseprozent und 70%-Masseprozent, bevorzugt zwischen 3% und 50%-Masseprozent, oder bei ca. 6%-Masseprozent liegt.

12. Abgaspartikelfilter nach einem der vorhergehenden Ansprüche, wobei der metallische Schaumkörper Oxidationskatalysatoren enthält und / oder der Schaumkörper Zeolithe enthält.

13. Abgaspartikelfilter nach einem der vorangehenden Ansprüche, wobei mehrere metallische Schaumkörper mit unterschiedlichen mittleren Porengrössen in Serie angeordnet sind, wobei die Porengrösse in Strömungsrichtung des Abgases abnimmt, und / oder wobei der metallische Schaumkörper eine Porosität von mehr als 60%, im Speziellen von mehr als 80%, insbesondere von mehr als 90% aufweist.

14. Abgaspartikelfilter nach einem der vorangehenden Ansprüche, wobei eine Freibrenneinrichtung zum Verbrennen, insbesondere zum periodischen Verbrennen von abgelagerten Abgaspartikeln vorgesehen ist.

15. Verfahren zum Herstellen eines Abgasfilters nach einem der Ansprüche 1 bis 14.
